# EUROPEAN PATENT SPECIFICATION

(11) **EP 2 753 579 B1**
(45) Date of publication and mention of the grant of the patent: **16.12.2020**
(21) Application number: 12830164.5
(22) Date of filing: 06.09.2012
(51) Int. Cl.: C01B 39/02, C01B 39/04, C01B 39/10, C01B 39/54, B01J 29/70

(54) **SYNTHESIS OF ZEOLITIC MATERIALS USING N,N-DIMETHYL ORGANOTEMPLATES**
SYNTHESE VON ZEOLITHISCHEM MATERIAL UNTER VERWENDUNG VON N, N-DIMETHYL-ORGANOTEMPLATES
SYNTHÈSE DE MATÉRIAUX ZÉOLITIQUES AU MOYEN DE MATRICES ORGANIQUES N,N-DIMÉTHYLÉES

(30) Priority: 06.09.2011 EP 11180148
(43) Date of publication of application: 16.07.2014
(73) Proprietor: BASF SE, 67056 Ludwigshafen am Rhein (DE)
(72) Inventor: YILMAZ, Bilge, New York, NY 10014 (US); BERENS, Ulrich, 79589 Binzen (DE); SWAMINATHAN, Vijay Narayanan, Mumbai 400 076 (IN); MÜLLER, Ulrich, 67435 Neustadt (DE); IFFLAND, Gabriele, 69126 Heidelberg (DE); SZARVAS, Laszlo, 67071 Ludwigshafen (DE)
(86) International application number: PCT/IB2012/054596
(87) International publication number: WO 2013/035054

(56) References cited:
- US-A1- 2007 244 341
- US-A1- 2008 045 767
- US-A1- 2011 196 183
- XU, HONG ET AL.: 'Synthesis and properties of a zeolite LEV analogue from the system- Na20- A1203- Si02- N,N-dimethylpiperidine chloride-HZO.' CATALYST TODAY. vol. 148, no. 1-2, 25 March 2009, pages 6 - 11, XP026684653

## Description

### TECHNICAL FIELD

The present invention relates to a process for the production of a zeolitic material having a CHA framework structure.

### INTRODUCTION

Molecular sieves are classified by the Structure Commission of the International Zeolite Association according to the rules of the IUPAC Commission on Zeolite Nomenclature. According to this classification, framework-type zeolites and other crystalline microporous molecular sieves, for which a structure has been established, are assigned a three letter code and are described in the Atlas of Zeolite Framework Types, 5th edition, Elsevier, London, England (2001).

Chabazite and Levyne are well studied examples of zeolitic materials, wherein Chabazite is the classical representative of the class of zeolitic materials having a CHA framework structure, and Levyne for its part is the classical representative of the class of zeolitic materials having an LEV framework structure. Both compounds and related materials having the given framework structure are employed in a variety of applications, and in particular serve as heterogeneous catalysts in a wide range of reactions such as in methanol to olefin catalysis and selective catalytic reduction of nitrogen oxides NOₓ to name some two of the most important applications. Zeolitic materials of both the CHA and LEV framework type are three-dimensional 8-membered-ring (8MR) pore/channel systems containing double-six-rings (D6R) and cages. The difference between the two structures stems from the stacking of the double-six-rings and cages.

Synthetic Chabazite and CHA-type zeolites are synthesized with the help of structure-directing agents, typically using exotic organotemplates such as adamantyl ammonium-based compounds. Same applies with respect to synthetic Levyne and LEV-type zeolites which are typically also prepared using exotic structure-directing agents such as quinuclidine-based organotemplates. Although recently lower-cost organotemplates such as diethyldiemethyl ammonium hydroxide have been discovered for the synthesis of LEV-type zeolites, this is yet not the case for the synthesis of Chabazite and related materials having the CHA-type framework. The problem therefore remains, in particular with respect to the synthesis of Chabazite and related materials having the CHA-type framework structure, that cost-intensive organotemplate materials must be employed in procedures for their preparation.

Furthermore, said problem is accentuated by the fact that the cost-intensive materials employed as structure-directing agents are trapped in the zeolitic materials obtained from template synthesis. As such, their removal is necessary in order to open the porous volume of the materials for the actual utilization, e.g. as molecular sieves or in catalysis. Complete removal of the structure-directing agents, however, is difficult and is normally only achieved by calcination at high temperatures, a procedure which greatly increases the production costs since the organic template is destroyed in the process and may therefore not be recycled.

US 2008/045767 (A1) discloses a method of synthesizing a crystalline material, in particular a high silica zeolite, comprising a chabazite (CHA) framework type molecular sieve. The synthesis method of US 2008/045767 (A1) employs a reaction mixture that is substantially free of added hydrofluoric acid and that uses an inexpensive structure directing agent and/or a high water content. In addition, said invention relates to the use of the resultant molecular sieve, particularly as a catalyst in a process for the conversion of oxygenates, particularly methanol, to olefins, particularly ethylene and propylene.

Campbell et al., Chem. Commun. 1998, 16, 1725-1726 disclose the use of N,N-dimethylpiperidinium as a structure directing agent in the synthesis of zeolitic materials having the MOR, MTW, LEV, and NON-type framework structure, in addition to the zeolite ERS-7.

As an alternative to said methods, organotemplate-free synthetic methodologies have been developed which rely on the seeding of synthesis mixtures in the absence of structure-directing agents. Xie et al., Chem. Commun. 2011, 47, 3945-3947 for example discloses seed-directed syntheses of zeolite Beta, Levyne, and Heulandite zeolites in the absence of organotemplates. Although such methods afford a solution to problems encountered in preparation methods involving the use of organotemplates, in particular in view of production costs and environmental issues related to the waste products generated during the removal of the organotemplates, such seeded syntheses are limited to very few types of zeolites. In particular, organotemplate-free synthetic methodologies are not available for the production of Chabazite and other zeolitic materials having a CHA-type framework structure.

Furthermore, seeded syntheses afford very specific crystallization products. In the particular case of crystallization products having more than one type of framework element in the oxide structure such as e.g. in aluminosilicates including both Si and Al as framework elements in the oxides, the distribution of Si and Al is clearly different to the distribution found in zeolitic materials obtained from organotemplate mediated syntheses. Accordingly, particular features such as e.g. specific catalytic activities found for zeolitic materials obtained from synthetic methodologies may not be reproduced in the products obtained from organotemplate-free synthetic methodologies due to said differences in composition and structure, and in particular due to the different distribution of framework elements in the crystallized products.

Accordingly, there is a need for novel synthetic methodologies involving the use of organotemplates which may afford new zeolitic materials which may not be obtained with the aid of organotemplate-free synthetic methodologies. Furthermore, there remains a need for finding new organotemplates which do not involve high production costs. Finally, there is an ongoing need for finding new synthetic methodologies involving the use of organotemplates which may afford new zeolitic materials having new and interesting properties, in particular with respect to the numerous applications in which zeolites find widespread use, such as in the field of molecular sieves and as versatile catalysts for use in a variety of chemical conversions.

### DETAILED DESCRIPTION

It is therefore the object of the present invention to find a novel synthetic methodology for the production of novel zeolitic materials displaying unprecedented physical and chemical properties. Thus, it has unexpectedly been found that the use of N,N-dimethylpiperidinium hydroxide as structure directing agent may be used to afford zeolitic materials having the CHA-type framework structure.

Furthermore, it has quite surprisingly been found that when used in specific amounts, N,N-dimethylpiperidinium hydroxide may also afford zeolitic materials of the LEV-type framework with unprecedented characteristics. For example, in the specific case of aluminosilicate structures, it has unexpectedly been found that zeolitic materials having the LEV-type framework structure may be obtained which display unprecedented Si : Al molar ratios as obtained from syntheses involving the use of organotemplates as structure directing agents. More specifically, it has quite surprisingly been found that the unique physical properties and chemical reactivities of zeolitic materials obtained from organotemplate mediated synthesis may be extended to Si : Al molar ratios which have until now not been achieved.

Finally, it has surprisingly been found that the use of N,N-dimethylpiperidinium hydroxide may also afford novel zeolitic materials having a layered structure.

Thus, the present invention relates to a process for the preparation of a zeolitic material having a CHA framework structure comprising YO₂ and X₂O₃, wherein the zeolitic material displays a Y : X molar ratio comprised in the range of from 1 to 10.5, wherein said process comprises the steps of
(1) providing a mixture comprising N,N-Dimethylpiperidinium hydroxide and further comprising one or more sources for YO₂ and one or more sources for X₂O₃;
(2) crystallizing the mixture provided in (1);
wherein Y is a tetravalent element, and X is a trivalent element, and
wherein the molar ratio of N,N-Dimethylpiperidinium hydroxide to Y in the mixture provided in step (1) and crystallized in step (2) is equal to or greater than 0.25, wherein said molar ratio is preferably comprised in the range of from 0.25 to 5, more preferably of from 0.25 to 3, more preferably of from 0.25 to 2, more preferably of from 0.3 to 1.7, more preferably of from 0.4 to 1.5, more preferably of from 0.45 to 1.3, more preferably of from 0.5 to 1.2, and even more preferably of from 0.55 to 1.15,
wherein the YO₂: X₂O₃ molar ratio in the mixture provided in step (1) is comprised in the range of from 5 to 300.

In particular, it has quite surprisingly been found that the use of higher concentrations of N,N-dimethylpiperidinium hydroxide may afford novel zeolitic materials having the CHA and LEV-type framework structures, as well as zeolitic materials having a layered structure. These findings are all the more unexpected since the presence of structure directing agents and in particular of organotemplates in reaction mixtures is generally regarded as a simple necessity for the formation of the characteristic microporous frameworks of such materials, in particular with respect to those materials which may otherwise not be obtained. More specifically, it is generally accepted that a sufficient amount shall be present in the reaction mixture for enabling the formation of the zeolitic framework around them via self-assembly processes, wherein it is desirable that they not be used in a greater amount than is absolutely necessary in view of their cost as well as due to the aforementioned environmental aspects incurred by their use.

Thus, according to the present invention, the amount of the N,N-Dimethylpiperidinium hydroxide provided in step (1) of the inventive process is chosen such, that the molar ratio of N,N-Dimethylpiperidinium hydroxide to Y in said mixture is equal to or greater than 1 : 4, i.e. equal to or greater than 0.25. In this respect, it must be noted that according to the present invention there is no general restriction as to the maximal molar content of N,N-Dimethylpiperidinium hydroxide which may be provided in the mixture according to step (1) relative to the molar content of Y contained in the one or more sources for YO₂ equally contained in said mixture. Thus, in principle, any suitable amount of N,N-Dimethylpiperidinium hydroxide may be provided in step (1), provided that the molar ratio of N,N-Dimethylpiperidinium hydroxide to Y contained in the mixture of step (1) is equal to or greater than 0.25, and that a zeolitic material having a structure comprising YO₂ may be obtained from crystallization in step (2). By way of example, the amount of N,N-Dimethylpiperidinium hydroxide provided in step (1) may be chosen such that the molar ratio of N,N-Dimethylpiperidinium hydroxide to Y contained in the mixture is comprised in the range of from 0.25 to 5, wherein it is preferred that said molar ratio is comprised in the range of from 0.25 to 5, more preferably of from 0.25 to 3, more preferably of from 0.25 to 2, more preferably of from 0.3 to 1.7, more preferably of from 0.4 to 1.5, more preferably of from 0.45 to 1.3, and more preferably of from 0.5 to 1.2. According to particularly preferred embodiments, the molar ratio of N,N-Dimethylpiperidinium hydroxide to Y contained in the mixture of step (1) is of from 0.55 to 1.15.

According to particular embodiments of the present invention which are further preferred, the molar ratio of N,N-Dimethylpiperidinium hydroxide to Y contained in the mixture of step (1) is comprised in the range of from 0.25 to 5, preferably of from 0.3 to 3, more preferably of from 0.4 to 2, more preferably of from 0.6 to1.7, more preferably of from 0.8 to 1.4, more preferably of from 1 to 1.2, and even more preferably of from 1.1 to 1.15. Alternatively, according to further embodiments of the present invention which are preferred, the molar ratio of N,N-Dimethylpiperidinium hydroxide to Y contained in the mixture of step (1) is comprised in the range of from 0.25 to 3, preferably of from 0.3 to 2, more preferably of from 0.4 to 1.2, more preferably of from 0.45 to 0.9, more preferably of from 0.5 to 0.7, and even more preferably of from 0.55 to 0.6.

Accordingly, it was highly unexpected that the use of N,N-Dimethylpiperidinium hydroxide in unusually high amounts as in the present invention may afford completely different and novel crystallization products compared to those obtained when using such templates in lower amounts as known in the art. In particular, it has surprisingly been discovered that in the case of N,N-Dimethylpiperidinium hydroxide, beyond the effect of providing a structure directing agent allowing for the formation of the microporous characteristics of the zeolitic materials, a highly unexpected concentration effect has been discovered which allows for the formation of the novel zeolitic materials of the present invention.

Within the meaning of the present invention the term "zeolitic material" generally refers to any zeolite containing material. According to a preferred meaning, the term zeolitic material refers to one or more zeolites. "Zeolites" as related to in the context of the present invention are crystalline compounds with well-ordered channel or cage structures containing micropores. The expression "micropore" as used in the context of the present invention corresponds to the definition given in "Pure Applied Chemistry" (1976), Vol. 45, p. 71 ff., in particular p. 79. According to this definition, micropores are pores with a pore diameter of less than 2 nm. The network of these zeolites is made of YO₄ and XO₄-tetrahedra that are bridged via shared oxygen bonds. An overview of the known structures can be found in, e. g. , W. M. Meier und D. H. Olson in "Atlas of Zeolite Structure Types", Elsevier, 4th Ed., London 1996. In addition to micropores, the zeolitic materials according to the invention may also contain mesopores and/or macropores as well. Furthermore, zeolitic materials are disclosed hereinhaving a layered structure. In particular, zeolitic materials having a layered structure are characterized in that in their X-ray diffraction pattern they display one or more intense reflections, preferably one intense reflection, at low diffraction angles, wherein preferably the most intense reflection has the lowest 2 Theta value among the reflections resulting from the zeolitic material having the layered structure. According to a particularly preferred meaning of the present invention, the term "zeolite" refers to one or more aluminosilicate compounds, and the term "zeolitic material" accordingly to a material containing one or more zeolites, and more preferably to the one or more zeolites themselves.

Furthermore, in the zeolitic material which may be obtained according to the inventive process, YO₂ and X₂O₃ are contained in the framework structure of the zeolitic material as structure building elements, as opposed to non-framework elements which can be present in the pores and/or cavities formed by the framework structure and typical for zeolitic materials in general.

According to the present invention, N,N-Dimethylpiperidinium hydroxide is provided as structure directing agent in the mixture according to step (1) of the inventive process.

According to the present invention, a zeolitic material having a CHA framework structure is crystallized in step (2). Said material comprises YO₂ and X₂O₃, wherein Y stands for any conceivable tetravalent element, Y standing for either one or several tetravalent elements. Preferred tetravalent elements according to the present invention include Si, Sn, Ti, Zr, and Ge, and combinations of two or more thereof. More preferably, Y stands for Si, Ti, or Zr, or any combination of said tetravalent elements, even more preferably for Si and/or Sn. According to the present invention, it is particularly preferred that Y stands for Si.

Thus, according to preferred embodiments of the present invention, Y is selected from the group consisting of Si, Sn, Ti, Zr, Ge, and mixtures of two or more thereof, wherein Y preferably comprises Si, and wherein even more preferably Y is Si.

Furthermore, according to the process of the present invention one or more sources for YO₂ can be provided in step (1) in any conceivable form, provided that a zeolitic material having a CHA framework structure comprising YO₂ and X₂O₃ can be crystallized in step (2). Preferably, YO₂ is provided as such and/or as a compound which comprises YO₂ as a chemical moiety and/or as a compound which (partly or entirely) is chemically transformed to YO₂ during the inventive process.

In preferred embodiments of the present invention, wherein Y stands for Si or for a combination of Si with one or more further tetravalent elements, the source for SiO₂ preferably provided in step (1) can be any conceivable source. There can therefore be used, for example, all types of silica and/or silicates, preferably fumed silica, silica hydrosols, reactive amorphous solid silicas, silica gel, silicic acid, water glass, sodium metasilicate hydrate, sesquisilicate or disilicate, colloidal silica, pyrogenic silica, silicic acid esters, or tetraalkoxysilanes, or mixtures of at least two of these compounds. Among the silicates which may be employed, alkali metal silicates are preferred, more preferably water glass, more preferably sodium and/or potassium silicate, and even more preferably sodium silicate. Among the silica which may be employed, fumed silica is preferred. According to particularly preferred embodiments the at least one source for SiO₂ comprises silica, preferably fumed silica.

Therefore, it is preferred according to the present invention that the one or more sources for YO₂ comprises one or more compounds selected from the group consisting of silicas, silicates, and mixtures of two or more thereof, wherein preferably the one or more sources for YO₂ comprise one or more silicas, wherein more preferably the one or more sources for YO₂ comprise fumed silica, and wherein even more preferably the source for YO₂ is fumed silica.

According to the present invention, the zeolitic material crystallized in step (2) comprises X₂O₃, wherein X stands for any conceivable trivalent element, X standing for either one or several trivalent elements. Preferred trivalent elements according to the present invention include Al, B, In, and Ga, and combinations thereof. More preferably, X stands for Al, B, or Ga, or any combination of said trivalent elements, even more preferably for Al and/or B. According to the present invention, it is particularly preferred that X stands for Al.

Therefore, according to preferred embodiments of the present invention, X is selected from the group consisting of Al, B, In, Ga, and mixtures of two or more thereof, wherein X preferably comprises Al, B, or Ga, wherein more preferably X comprises Al and/or B, and wherein even more preferably X is Al or B.

According to the inventive process, one or more sources for X₂O₃ are provided in step (1). In general, X₂O₃ can be provided in any conceivable form, provided that a zeolitic material comprising X₂O₃ can be crystallized in step (2). Preferably, X₂O₃ is provided as such and/or as a compound which comprises X₂O₃ as a chemical moiety and/or as a compound which (partly or entirely) is chemically transformed to X₂O₃ during the inventive process.

In preferred embodiments of the present invention, wherein X stands for Al or for a combination of Al with one or more further trivalent elements, the source for Al₂O₃ provided in step (1) can be any conceivable source. There can be used for example any type of alumina and aluminates, aluminum salts such as, for example, alkali metal aluminates, aluminum alcoholates, such as, for example, aluminum triisopropylate, or hydrated alumina such as, for example, alumina trihydrate, or mixtures thereof. Preferably, the source for Al₂O₃ comprises at least one compound selected from the group consisting of alumina and aluminates, preferably aluminates, more preferably alkali metal aluminates, wherein even more preferably, the alkali metal of the aluminate comprises one or more of the alkali metals M. Among the preferred alkali metal aluminates, the at least one source preferably comprises sodium and/or potassium aluminate, more preferably sodium aluminate. In particularly preferred embodiments of the present invention, the source for Al₂O₃ is sodium aluminate.

According to further preferred embodiments of the present invention wherein X stands for B or for a combination of B with one or more further trivalent elements, the source for B₂O₃ provided in step (1) can again be any conceivable source. By way of example, free boric acid and/or borates and/or boric esters may be provided as the source for B₂O₃, such as, for example, triethyl borate or trimethyl borate. According to the present invention it is preferred that the source for B₂O₃ comprises one or more boron containing compounds selected from the group consisting of free boric acid, borates, boric esters, and mixtures of two or more thereof, preferably from the group consisting of boric acid, borates, and mixtures of two or more thereof. In particularly preferred embodiments of the present invention, the source for B₂O₃ is boric acid.

According to particularly preferred embodiments of the inventive process, the mixture according to step (1) comprises at least one silica as a source for YO₂ and at least one aluminate as a source for X₂O₃, more preferably at least one fumed silica and/or at least one alkali metal aluminate, wherein the alkali metal of said preferred embodiments preferably comprises sodium and/or potassium, more preferably sodium, and wherein the alkali metal even more preferably is sodium. According to further embodiments of the present invention which are particularly preferred, the mixture according to step (1) comprises at least one silica as a source for YO₂ and one or more boron containing compound as a source for X₂O₃, more preferably at least one silica and one or more boron containing compounds selected from the group consisting of free boric acid, borates, boric esters, and mixtures of two or more thereof, wherein according to particularly preferred embodiments, the mixture according to step (1) comprises fumed silica and boric acid.

Therefore, it is preferred according to the present invention that wherein the one or more sources for X₂O₃ comprises one or more compounds selected from the group consisting of aluminas, aluminates, and mixtures of two or more thereof, wherein preferably the one or more sources for X₂O₃ comprises one or more aluminates, preferably one or more alkali metal aluminates, more preferably one or more alkali metal aluminates comprising sodium and/or potassium aluminate, preferably sodium aluminate, wherein even more preferably the source for X₂O₃ is sodium and/or potassium aluminate, and preferably sodium aluminate. Alternatively, it is preferred that the one or more sources for X₂O₃ comprises one or more compounds selected from the group consisting of boric acid, borates, boric esters, and mixtures of two or more thereof, preferably from the group consisting of boric acid, borates, and mixtures of two or more thereof, wherein even more preferably the one or more sources for X₂O₃ comprises boric acid.

In general, according to the present invention, the YO₂ : X₂O₃ molar ratio of the mixture provided in step (1) can have any conceivable value, provided that a zeolitic material having a CHA framework structure comprising YO₂ and X₂O₃, is crystallized in step (2). Generally, the molar ratio ranges anywhere from 0.5 to 300. According to the present invention it is however preferred that the YO₂: X₂O₃ molar ratio of the mixture provided in step (1) is comprised in the range of from 1 to 400 or greater, preferably from 5 to 300, more preferably from 10 to 200, more preferably from 20 to 150, and even more preferably from 40 to 120. It is particularly preferred according to the inventive process that the YO₂ : X₂O₃ molar ratio of the mixture provided in step (1) is comprised in the range of from 50 to 100.

Thus, according to preferred embodiments of the present invention, the YO₂: X₂O₃ molar ratio of the mixture according to step (1) ranges from 1 to 400 or greater, preferably from 5 to 300, more preferably from 10 to 200, more preferably from 20 to 150, more preferably from 40 to 120, and even more preferably from 50 to 100.

According to particular embodiments of the present invention which are further preferred, the YO₂: X₂O₃ molar ratio of the mixture provided in step (1) is comprised in the range of from 5 to 400, preferably of from 10 to 300, more preferably of from 50 to 250, more preferably of from 70 to 200, more preferably of from 80 to 150, more preferably of from 85 to 120, and even more preferably of from 90 to 100. Alternatively, according to further embodiments of the present invention which are preferred, the YO₂: X₂O₃ molar ratio of the mixture provided in step (1) is comprised in the range of from 1 to 300, preferably from 5 to 200, more preferably from 10 to 150, more preferably from 20 to 100, more preferably from 30 to 80, more preferably from 35 to 70, more preferably from 40 to 60, and even more preferably from 45 to 55.

In embodiments of the present invention which are further preferred, the zeolitic material obtained and/or obtainable according to the inventive process comprises at least on alkali metal M, preferably sodium and/or potassium, and more preferably sodium. The alkali metal can be added at any conceivable stage of the inventive process, wherein preferably it is also added in step (1). More preferably, the entire quantity of the alkali metal comprised in the zeolitic material having a CHA framework structure comprising YO₂ and X₂O₃, obtained in step (2) is added in step (1) of the inventive process. In particularly preferred embodiments of the inventive process, the alkali metal is partly or entirely contained in the one or more sources for YO₂ and/or X₂O₃ provided in step (1), and preferably entirely in the at least one source for X₂O₃.

According to the process of the present invention, the mixture provided in step (1) can contain one or more sources for hydroxide anions OH- apart from N,N-Dimethylpiperidinium hydroxide. In general any conceivable source for OH- can be used, wherein the at least one source preferably comprises a metal hydroxide, more preferably a hydroxide of an alkali metal M, more preferably sodium and/or potassium hydroxide, and even more preferably sodium hydroxide. In preferred embodiments of the inventive process, wherein the mixture comprises a silicate as a source for YO₂ and/or an aluminate as a source for X₂O₃, it is particularly preferred that the mixture does not contain a source for OH- apart from N,N-Dimethylpiperidinium hydroxide, and in particular does not contain a hydroxide, preferably a metal hydroxide, more preferably a hydroxide of an alkali metal M, more preferably sodium and/or potassium hydroxide, and even more preferably does not contain sodium hydroxide.

Furthermore, according to the inventive process there is no particular restriction as to the pH of the mixture provided in step (1) provided that a zeolitic material provided that a zeolitic material having a CHA framework structure comprising YO₂ and X₂O₃, can be crystallized in step (2). Thus, by way of example, the pH of the mixture provided in step (1) of the inventive process may range anywhere from 8 to 14. According to the present invention it is however preferred that the pH of the mixture provided in step (1) is comprised in the range of from 10 to 14, more preferably of from 11 to 14, more preferably of from 12 to 14, and even more preferably of from 13 to 14. According to particularly preferred embodiments of the inventive process the pH of the mixture provided in step (1) is comprised in the range of from 13.6 to 13.8.

Therefore, according to the present invention it is preferred that the pH of the mixture provided in step (1) of the inventive process is comprised in the range of from 8 to 14, preferably from 10 to 14, more preferably from 11 to 14, more preferably from 12 to 14, more preferably from 13 to 14, and even more preferably from 13.6 to 13.8.

In step (1) according to the present invention, the mixture can be prepared by any conceivable means, wherein mixing by agitation is preferred, preferably by means of stirring.

According to the present invention, the mixture according to step (1) of the inventive process preferably further comprises one or more solvents. In this respect, any conceivable solvents may be used in any conceivable amount, provided that a zeolitic material having a CHA framework structure comprising YO₂ and X₂O₃, can be crystallized in step (2). Thus, by way of example, the one or more solvents may be chosen from water, organic solvents, and mixtures thereof, preferably from the group consisting of distilled water, alcohols, and mixtures thereof, more preferably from the group consisting of distilled water, methanol, ethanol, propanol, and mixtures thereof. According to particularly preferred embodiments of the present invention, only water and preferably only distilled water is contained in the mixture according to step (1) as the solvent.

Therefore, according to preferred embodiments of the inventive process, the mixture provided in step (1) further comprises a solvent, wherein said solvent preferably comprises water, more preferably distilled water, wherein even more preferably the solvent is water, preferably distilled water.

As regards the one or more solvents which are preferably provided in the mixture according to step (1), any suitable amount thereof may be used in the mixture, provided that a zeolitic material having a CHA framework structure comprising YO₂ and X₂O₃, can be crystallized in step (2). Thus, by way of example, the H₂O : YO₂ molar ratio of the mixture provided in step (1), wherein YO₂ stands for the molar amount of YO₂ contained in the at least one source for YO₂ provided in step (1), may range anywhere from 1 to 150. According to the present invention it is however preferred that the H₂O : YO₂ molar ratio of the mixture ranges from 3 to 100, preferably from 5 to 60, more preferably from 8 to 45, more preferably from 10 to 35, wherein even more preferably the molar ratio is comprised in the range of from 11 to 30. According to particularly preferred embodiments, the H₂O : YO₂ molar ratio of the mixture provided in step (1) ranges from 12 to 28.

According to particular embodiments of the present invention which are further preferred, the H₂O : YO₂ molar ratio of the mixture provided in step (1) ranges from 15 to 60, preferably from 18 to 40, more preferably from 20 to 35, more preferably from 22 to 30, and even more preferably from 24 to 28. Alternatively, according to further embodiments of the present invention which are preferred, the H₂O : YO₂ molar ratio of the mixture provided in step (1) ranges from 1 to 25, preferably from 3 to 22, more preferably from 5 to 20, more preferably from 8 to 18, more preferably from 10 to 15, and even more preferably from 11 to 14.

Furthermore, as for the H₂O : YO₂ molar ratio of the mixture provided in step (1), the H₂O : X₂O₃ molar ratio of the mixture provided in step (1), wherein X₂O₃ stands for the molar amount of X₂O₃ contained in the at least one source for X₂O₃ provided in step (1), may have any suitable value, provided that a zeolitic material having a CHA framework structure comprising YO₂ and X₂O₃, can be crystallized in step (2). Thus, by way of example, the H₂O : X₂O₃ molar ratio of the mixture provided in step (1) may range anywhere from 100 to 8,000. According to the present invention, the H₂O : X₂O₃ molar ratio of the mixture provided in step (1) is preferably comprised in the range of from 500 to 5,000, more preferably of from 1,000 to 3,600, and even more preferably of from 1,100 to 3,000. According to particularly preferred embodiments, the H₂O : X₂O₃ molar ratio of the mixture provided in step (1) is comprised in the range of from 1,150 to 2,700.

According to particular embodiments of the present invention which are further preferred, the H₂O : X₂O₃ molar ratio of the mixture provided in step (1) ranges from 100 to 2,500, preferably from 500 to 2,000, more preferably from 1,000 to 1,700, more preferably from 1,100 to 1,500, more preferably from 1,150 to 1,400, and even more preferably from 1,200 to 1,300. Alternatively, according to further embodiments of the present invention which are preferred, the H₂O : X₂O₃ molar ratio of the mixture provided in step (1) ranges from 1,400 to 9,000, preferably from 1,600 to 7,500, more preferably from 1,800 to 6,000, more preferably from 2,000 to 4,500, more preferably from 2,200 to 3,500, more preferably from 2,400 to 3,000, and even more preferably from 2,500 to 2,700.

Thus, according to preferred embodiments of the inventive process, the H₂O : YO₂ molar ratio of the mixture provided in step (1) ranges from 1 to 150, preferably from 3 to 100, more preferably from 5 to 60, more preferably from 8 to 45, more preferably from 10 to 35, more preferably from 11 to 30, and even more preferably from 12 to 28,
and/or, preferably and
wherein the H₂O : X₂O₃ molar ratio of the mixture provided in step (1) ranges from 100 to 8,000, preferably from 500 to 5,000, more preferably from 1,000 to 3,600, more preferably from 1,100 to 3,000, and even more preferably from 1,150 to 2,700.

In general, the single components for providing the mixture of step (1) of the inventive process can be added in any order, provided that a zeolitic material having a CHA framework structure comprising YO₂ and X₂O₃ is crystallized from the mixture of step (1) in step (2). This may, by way of example, involve the addition of the optional solvent and the one or more ammonium compounds, followed by the addition of the one or more sources for X₂O₃, after which the one or more sources for YO₂ is then added.

In general, step (2) according to the inventive process can be conducted in any conceivable manner, provided that a zeolitic material having a CHA framework structure comprising YO₂ and X₂O₃, is crystallized from the mixture according to step (1). Thus, the mixture can be crystallized in any suitable type of vessel, wherein a means of agitation is optionally employed, preferably by rotation of the vessel and/or stirring, and more preferably by stirring the mixture. According to the inventive process, crystallization in step (2) may also be conducted under static conditions.

According to the inventive process, the mixture is preferably heated during at least a portion of the crystallization process in step (2). In general, the mixture can be heated to any conceivable temperature of crystallization, provided that a zeolitic material having a CHA framework structure comprising YO₂ and X₂O₃, is crystallized from the mixture. Thus, by way of example the mixture in step (2) may be heated to a temperature ranging anywhere from 80 to 250°C. According to the invention it is however preferred that the temperature be comprised in the range of from 100 to 200°C, more preferably from 120 to 180°C, more preferably from 130 to 170°C, and more preferably from 140 to 160°C. According to particularly preferred embodiments, the crystallization process in step (2) involves heating the mixture to a temperature comprised in the range of from 145 to 155°C.

Thus, according to the inventive process it is preferred that the crystallization in step (2) involves heating of the mixture provided in step (1), preferably at a temperature ranging from 80 to 250°C, more preferably from 100 to 200°C, more preferably from 120 to 180°C, more preferably from 130 to 170°C, more preferably from 140 to 160°C, and even more preferably from 145 to 155°C.

The preferred heating in step (2) of the inventive process can be conducted in any conceivable manner suitable for the crystallization of a zeolitic material having a CHA framework structure comprising YO₂ and X₂O₃. In general, heating may be conducted at one temperature of crystallization or vary between different temperatures. Preferably, a heat ramp is used for reaching the temperature of crystallization, wherein the heating rate preferably ranges from 10 to 100°C/h, more preferably from 20 to 70°C/h, more preferably from 25 to 60°C/h, more preferably from 30 to 50°C/h, and even more preferably from 35 to 45°C/h.

In preferred embodiments of the present invention, the mixture according to step (1) is subjected in step (2) to a pressure which is elevated with regard to normal pressure. The term "normal pressure" as used in the context of the present invention relates to a pressure of 101,325 Pa in the ideal case. However, this pressure may vary within boundaries known to the person skilled in the art. By way of example, this pressure can be in the range of from 95,000 to 106,000 or of from 96,000 to 105,000 or of from 97,000 to 104,000 or of from 98,000 to 103,000 or of from 99,000 to 102,000 Pa.

In preferred embodiments of the inventive process wherein a solvent is present in the mixture according to step (1), it is furthermore preferred that heating in step (2) is conducted under solvothermal conditions, meaning that the mixture is crystallized under autogenous pressure of the solvent which is used, for example by conducting heating in an autoclave or other crystallization vessel suited for generating solvothermal conditions. In particularly preferred embodiments wherein the solvent comprises water, preferably distilled water, heating in step (2) is accordingly preferably conducted under hydrothermal conditions.

Therefore, according to particularly preferred embodiments of the inventive process, the heating in step (2) is conducted under solvothermal conditions, preferably under hydrothermal conditions.

The apparatus which can be used in the present invention for crystallization is not particularly restricted, provided that the desired parameters for the crystallization process can be realized, in particular with respect to the preferred embodiments requiring particular crystallization conditions. In the preferred embodiments conducted under solvothermal conditions, any type of autoclave or digestion vessel can be used, wherein a Teflon-lined apparatus is preferred.

In general, the duration of the crystallization process in step (2) of the inventive process is not particularly limited, provided that a zeolitic material having a CHA framework structure comprising YO₂ and X₂O₃, may be obtained as a crystallization product in step (2). Thus, by way of example, the duration of the crystallization process in step (2) may be comprised in the range of from 0.1 to 20 d. According to the inventive process it is however preferred that the duration of the crystallization process in step (2) ranges from 0.5 to 15 d, more preferably from 1 to 10 d, more preferably from 2 to 8 d, more preferably from 3 to 7 d, and even more preferably from 4 to 6 d. According to particularly preferred embodiments of the inventive process, the duration of the crystallization process in step (2) ranges from 4.5 to 5.5 d.

Thus, according to further preferred embodiments of the inventive process wherein the crystallization in step (2) involves heating of the mixture for a period ranging from 0.1 to 20 d, preferably from 0.5 to 15 d, more preferably from 1 to 10 d, more preferably from 2 to 8 d, more preferably from 3 to 7 d, more preferably from 4 to 6 d, and even more preferably from 4.5 to 5.5 d.

According to preferred embodiments of the present invention, wherein the mixture is heated in step (2), said heating may be conducted during the entire crystallization process or during only one or more portions thereof, provided that a zeolitic material having a CHA framework structure comprising YO₂ and X₂O₃ is crystallized. Preferably, heating is conducted during the entire duration of crystallization.

In general, the process of the present invention can optionally comprise further steps for the work-up and/or further physical and/or chemical transformation of the zeolitic material having a CHA framework structure comprising YO₂ and X₂O₃, is crystallized in step (2) from the mixture provided in step (1). The crystallized material can for example be subject to any sequence of isolation and/or washing procedures and/or drying procedures and/or calcination procedures and/or ion-exchange procedures, wherein the zeolitic material obtained from crystallization in step (2) is preferably subject to at least one isolation and at least one washing procedure. Within the meaning of the present invention, the term "isolation" refers to a separation of the zeolitic material, and therefore refers to a "separation" or to a step of "separating" as defined in the present invention.

Therefore, it is preferred according to the present invention that the inventive process further comprises one or more of steps of
(3) isolating the zeolitic material, preferably by filtration,
   and/or
(4) washing the zeolitic material,
   and/or
(5) drying the zeolitic material.

In step (3) of the preferred embodiments of the inventive process, the zeolitic material may be isolated from the reaction mixture obtained in step (2) by any conceivable means, wherein by way of example any means of filtration, ultrafiltration, diafiltration, centrifugation and/or decantation methods may be employed including combinations of two or more thereof. Furthermore, the filtration methods can involve suction and/or pressure filtration steps. According to particularly preferred embodiments of the present invention, the isolation of the zeolitic material in step (3) comprises one or more filtration steps, wherein more preferably the separation in step (3) is achieved by filtration.

With respect to one or more optional washing procedures in step (4), any conceivable solvent can be used. Washing agents which may be used are, for example, water, alcohols, such as methanol, ethanol or propanol, or mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol, such as water and methanol or water and ethanol or water and propanol or water and methanol and ethanol or water and methanol and propanol or water and ethanol and propanol or water and methanol and ethanol and propanol. Water or a mixture of water and at least one alcohol, preferably water and ethanol, is preferred, distilled water being very particularly preferred as the only washing agent.

Preferably, the separated zeolitic material is washed until the pH of the washing agent, preferably the washwater, is in the range of from 6 to 8, preferably from 6.5 to 7.5, as determined via a standard glass electrode.

Furthermore, the inventive process can optionally comprise one or more drying steps. In general, any conceivable means of drying can be used. Drying procedures preferably include heating and/or applying vacuum to the zeolitic material having a CHA framework structure comprising YO₂ and X₂O₃. In envisaged embodiments of the present invention, one or more drying steps may involve spray drying, preferably spray granulation of the zeolitic material.

In embodiments which comprise at least one drying step, the drying temperatures are preferably in the range of from 25°C to 150°C, more preferably of from 60 to 140°C, more preferably of from 70 to 130°C and even more preferably in the range of from 75 to 125°C. The durations of drying are preferably in the range of from 2 to 60 h, more preferably in the range of 6 to 48 hours, and even more preferably of from 12 to 24 h.

In general, the optional isolation and/or washing and/or drying procedures comprised in the inventive process can be conducted in any conceivably order and repeated one or more times.

Preferably, the inventive process comprises at least one step (3) of isolating at least a portion of the zeolitic material crystallized according to step (2), preferably by filtration thereof. According to the inventive process it is further preferred that after the at least one step of isolating, the zeolitic material is subject to at least one step of drying, wherein more preferably the zeolitic material is subject to at least one step of washing prior to the at least one drying step. In a particularly preferred embodiment, the zeolitic material crystallized according to step (2) is subject to at least one step (3) of isolating the zeolitic material from the reaction mixture obtained in step (2), followed by at least one step of washing, and then followed by at least one step of drying.

According to a further embodiment of the inventive process which is alternatively preferred, the zeolitic material crystallized in step (2) is directly subject to at least one step of drying, preferably to spray drying and/or spray granulation, without isolating, washing, or drying of the zeolitic material beforehand. Directly subjecting the reaction mixture obtained from step (2) of the inventive process to a spray drying or spray granulation stage has the advantage that isolation and drying is performed in a single stage. Consequently, according to this embodiment of the present invention, an even more preferred process is provided wherein the number of post-synthesis workup steps is minimized, as a result of which a zeolitic material having a CHA framework structure comprising YO₂ and X₂O₃, can be obtained from a highly simplified process.

In addition to or alternatively to one or more of the isolation, washing and/or drying procedures defined in optional steps (3), (4), and (5), the zeolitic material obtained in step (2) is preferably subject to a step (6) of calcination. In principle, calcination may be conducted at any conceivable temperature, provided that a thermally stable zeolitic material is obtained without substantial deterioration of the crystalline structure present in the zeolitic material as obtained in step (2). According to preferred embodiments, calcination of the zeolitic material is effected at a temperature comprised in the range of from 250 to 850°C, more preferably at a temperature of from 350 to 750°C, more preferably of from 450 to 650°C, more preferably of from 460 to 600°C, more preferably of from 470 to 560°C, and even more preferably of from 500 to 550°C.

According to preferred embodiments of the present invention which include a step of calcining the zeolitic material obtained according to (2), there is no particular restriction as to when the step of calcining is conducted. Thus, by way of example, the zeolitic material obtained from step (2) of the inventive process may be subject to a calcination step (6) after having isolated the zeolitic material in one or more steps (3), preferably by one or more filtration steps. It is however preferred that after having been isolated, the zeolitic material is first subject to one or more washing step (4), preferably with distilled water, prior to being subject to a calcination procedure (6), wherein even more preferably the isolated and washed zeolitic material is further subject to one or more drying procedures (5) prior to subjecting said zeolitic material to a calcination procedure (6). Alternatively, the zeolitic material crystallized in step (2) may directly be subject to one or more drying steps (4), without isolating, washing, or drying the zeolitic material beforehand, after which it is then directly subject to a calcination procedure (6). According to said alternatively preferred embodiments, direct drying of the zeolitic material obtained from step (2) is preferably achieved by spray drying and/or spray granulation, even more preferably by spray granulation.

Therefore, according to preferred embodiments, the inventive process further comprises one or more steps of
(6) calcining the zeolitic material obtained according to (2) or (3) or (4) or (5),
wherein the steps (3) and/or (4) and/or (5) and/or (6) can be conducted in any order, and wherein at least one of said steps is preferably repeated one or more times.

Within the meaning of the present invention, a material which is designated as a "synthetic" material does not signify that the designated material as such may not naturally occur in nature. In particular, a "synthetic" material only indicates that it is man-made, but by no means excludes that the material as such may occur naturally.

### Description of the Figures

The powder X-ray diffraction patterns displayed in the figures were recorded on a Bruker-AXS D8 Advance Series 2 X-ray diffractometer with monochromatic Cu K alpha-1 radiation. The diffraction data were collected using a SOL-XE energy dispersive X-ray detector. In the figures, the angle 2 Theta in ° is shown along the abscissa and the intensities are plotted along the ordinate.

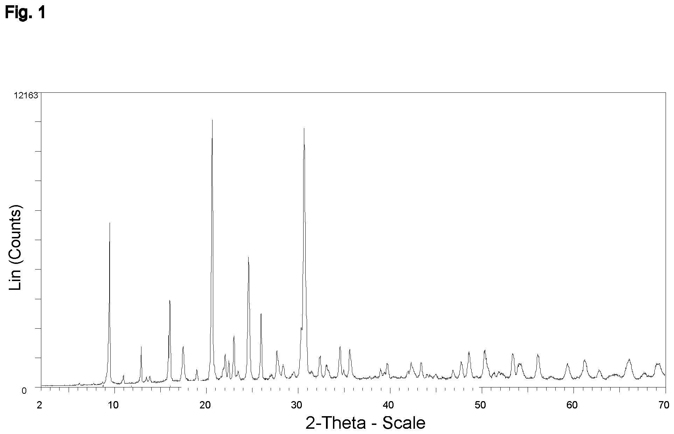

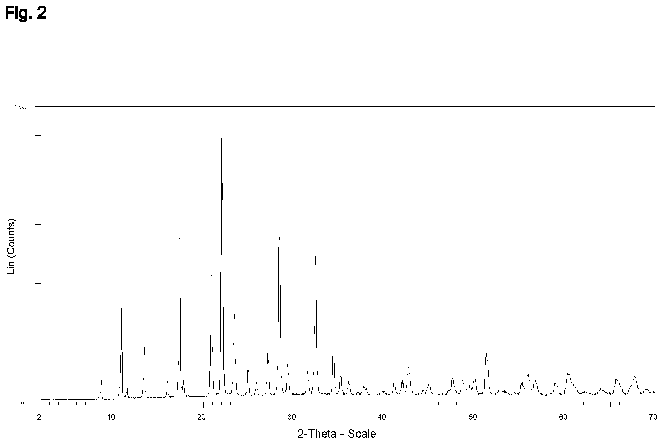

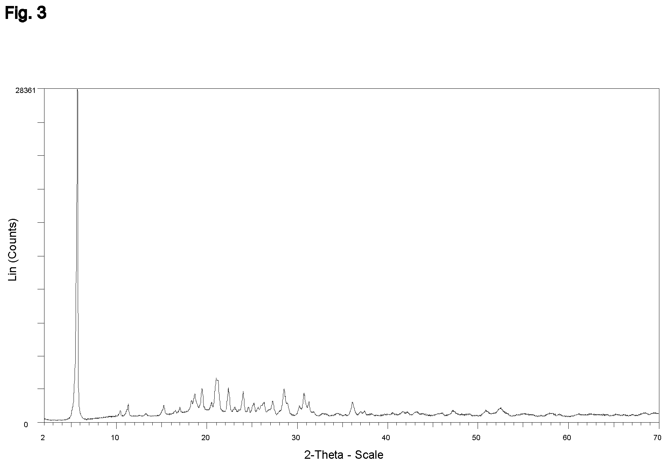

- Figures 1 to 3: show the X-ray diffraction pattern of the crystalline material obtained in Example 1 and Comparative Examples 2 and 3, respectively. In each figure, the x axis shows the 2 Theta values, with tivk marks, from the left, of 2, 10, 20, 30, 40, 50, 60, and 70. In each figure, the y axis shows the Lin(Counts), wherein, from bottom to top, figure 1 starts at 0 and ends at 12163, figure 2 starst at 0 and ends at 12690, and figure 3 starts at 0 and ends at 28361.

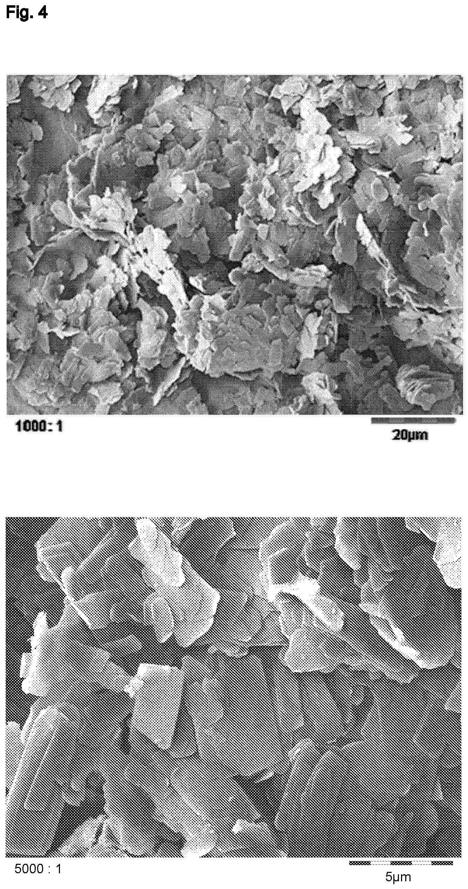

- Figure 4: shows respective scanning electron microscopy (SEM) images of the washed and dried sample obtained in Comparative Example 3. The image at the top shows a resolution of 1000:1, and in the lower right hand corner, the length of 20 micrometers as shown. The image at the bottom shows a resolution of 5000:1, and in the lower right hand corner, the length of 5 micrometers as shown.

### Examples

### Example 1: Preparation of a zeolitic material having a CHA framework structure using the N,N-dimethylpiperidinium cation as structure directing agent

153.8 g of an aqueous solution having 24.0 wt.-% of N,N-dimethylpiperidine hydroxide were weighed into a Teflon® receptacle, after which 1.4 g of NaAlO₂ were added and the resulting mixture stirred for 10 min. A total of 14.8 g of fumed silica (Aerosil 200) were then added to the mixture while stirring, and the resulting mixture stirred for an additional 15 min to afford a pale white translucent mixture having a pH of 13.7. The mixture was then transferred to an autoclave and crystallized at 150°C for 120 h (5 days). After having let the reaction mixture cool to room temperature, the clear solution containing a white solid obtained as the reaction product was filtered over a glass frit, and the residue washed with 2 I of distilled water. The white solid was then dried at 120°C for 16 h to afford 4.3 g of a white powder.

Electron Probe Micro Analysis of the crystalline product of Example 1 via Energy Dispersive X-Ray Spectroscopy (EDXS) afforded an Si : Al molar ratio of 3.5.

In Fig. 1, the X-ray diffraction (XRD) pattern of the crystalline product obtained from hydrothermal synthesis after filtration and drying is displayed. In particular, the XRD pattern is typical for a CHA-type framework structure.

2 g of the washed and dried microcrystalline product was then heated to 525°C for 10 h thus affording 1.9 g of the calcined material. The nitrogen adsorption isotherms of the calcined material were then determined according to DIN 66134 at 77 K. The evaluation of the data offered an equivalent surface of 718.63 m²/g according to the Langmuir method, and a BET surface area of 550.35 m²/g.

### Comparative Example 2: Preparation of a zeolitic material having an LEV framework structure using the N,N-dimethylpiperidinium cation as structure directing agent

154.2 g of an aqueous solution having 24.0 wt.-% of N,N-dimethylpiperidine hydroxide were weighed into a Teflon® receptacle, after which 0.9 g of NaAlO₂ were added and the resulting mixture stirred for 10 min. A total of 14.8 g of fumed silica (Aerosil 200) were then added to the mixture while stirring and the resulting mixture stirred for an additional 15 min to afford a pale white translucent mixture having a pH of 13.7. The mixture was then transferred to an autoclave and crystallized at 150°C for 120 h (5 days). After having let the reaction mixture cool to room temperature, the clear solution containing a white solid obtained as the reaction product was filtered over a glass frit, and the residue washed with 2 I of distilled water. The white solid was then dried at 120°C for 16 h to afford 4.3 g of a white powder.

In Fig. 2, the X-ray diffraction (XRD) pattern of the crystalline product obtained from hydrothermal synthesis after filtration and drying is displayed. In particular, the XRD pattern is typical for a LEV-type framework structure.

### Comparative Example 3: Preparation of a zeolitic material having a layered structure using the N,N-dimethylpiperidinium cation as structure directing agent

141.9 g of an aqueous solution having 24.0 wt.-% of N,N-dimethylpiperidine hydroxide were weighed into a Teflon® receptacle, after which 0.6 g of H₃BO₃ were added and the resulting mixture stirred for 10 min. A total of 27.6 g of fumed silica (Aerosil 200) were then added to the mixture while stirring and the resulting mixture stirred for an additional 15 min to afford a pale white translucent mixture. The mixture was then transferred to an autoclave and crystallized at 150°C for 120 h (5 days). After having let the reaction mixture cool to room temperature, the clear solution containing a white solid obtained as the reaction product was filtered over a glass frit, and the residue repeatedly washed with distilled water. The white solid was then dried at 120°C for 16 h to afford 14 g of a white powder.

In Fig. 3, the X-ray diffraction (XRD) pattern of the crystalline product obtained from hydrothermal synthesis after filtration and drying is displayed. As may be taken from the strongest reflection at 5.645 ° 2 Theta, the zeolitic material has a layered structure.

**Table 1: X-ray diffraction pattern of the layered structure of Example 3.**

| Diffraction angle 2 Theta /° [Cu K(alpha 1)] | Intensity (%) |
|---|---|
| 5.645 | 100 |
| 10.425 | 2.7 |
| 11.151 | 3 |
| 11.294 | 4.6 |
| 12.548 | 1.1 |
| 13.139 | 1.6 |
| 13.26 | 1.5 |
| 15.192 | 4.1 |
| 16.457 | 2.4 |
| 16.962 | 3.5 |
| 18.273 | 5.3 |
| 18.619 | 7.4 |
| 19.437 | 8.9 |
| 20.482 | 4.8 |
| 21.006 | 11.9 |
| 21.184 | 11.4 |
| 22.398 | 9 |
| 23.086 | 3.3 |
| 24.02 | 7.9 |
| 24.622 | 3.3 |
| 25.176 | 4.2 |
| 25.675 | 3.2 |
| 26.029 | 3.7 |
| 26.31 | 4.5 |
| 26.84 | 2.5 |
| 27.261 | 5 |
| 28.024 | 1.9 |
| 28.525 | 8.5 |
| 28.858 | 4.3 |
| 30.246 | 3.4 |
| 30.746 | 7.3 |
| 31.262 | 4.6 |
| 31.771 | 1.5 |
| 32.81 | 1.1 |
| 33.193 | 0.7 |
| 34.426 | 1 |
| 36.134 | 4.5 |
| 37.043 | 1.6 |
| 37.424 | 1.7 |
| 38.232 | 0.8 |
| 40.585 | 1.1 |
| 41.66 | 1.4 |
| 42.128 | 1.5 |
| 43.188 | 1.5 |
| 43.824 | 0.8 |
| 45.601 | 0.8 |
| 45.975 | 1 |
| 47.269 | 1.8 |
| 50.913 | 1.6 |
| 52.517 | 2.7 |

Figure 4 displays SEM-images of the washed and dried crystalline product as obtained from hydrothermal synthesis.

### Cited Prior Art Documents

- Campbell et al., Chem. Commun. 1998, 16, 1725-1726
- Xie et al., Chem. Commun. 2011, 47, 3945-3947
- Pure Applied Chemistry" (1976), Vol. 45, pp. 71
- US 2008/045767 (A1)

## Claims

1. A process for the preparation of a zeolitic material having a CHA framework structure comprising YO₂ and X₂O₃,
wherein the zeolitic material displays a Y : X molar ratio comprised in the range of from 1 to 10.5,
wherein said process comprises the steps of
(1) providing a mixture comprising N,N-Dimethylpiperidinium hydroxide and further comprising one or more sources for YO₂ and one or more sources for X₂O₃;
(2) crystallizing the mixture provided in (1);
wherein Y is a tetravalent element, and X is a trivalent element, and
wherein the molar ratio of N,N-Dimethylpiperidinium hydroxide to Y in the mixture provided in step (1) and crystallized in step (2) is equal to or greater than 0.25, wherein said molar ratio is preferably comprised in the range of from 0.25 to 5, more preferably of from 0.25 to 3, more preferably of from 0.25 to 2, more preferably of from 0.3 to 1.7, more preferably of from 0.4 to 1.5, more preferably of from 0.45 to 1.3, more preferably of from 0.5 to 1.2, and even more preferably of from 0.55 to 1.15,
wherein the YO₂: X₂O₃ molar ratio in the mixture provided in step (1) is comprised in the range of from 5 to 300.

2. The process of claim 1, wherein Y is selected from the group consisting of Si, Sn, Ti, Zr, Ge, and mixtures of two or more thereof, wherein Y preferably comprises Si, and wherein even more preferably Y is Si.

3. The process of any of claims 1 to 2, wherein the one or more sources for YO₂ comprises one or more compounds selected from the group consisting of silicas, silicates, and mixtures of two or more thereof, wherein preferably the one or more sources for YO₂ comprise one or more silicas, wherein more preferably the one or more sources for YO₂ comprise fumed silica, and wherein even more preferably the source for YO₂ is fumed silica.

4. The process of any of claims 1 to 3, wherein X is selected from the group consisting of Al, B, In, Ga, and mixtures of two or more thereof, wherein X preferably comprises Al, B, or Ga, wherein more preferably X comprises Al and/or B, and wherein even more preferably X is Al or B.

5. The process of any of claims 1 to 4, wherein the one or more sources for X₂O₃ comprises one or more compounds selected from the group consisting of aluminas, aluminates, and mixtures of two or more thereof, wherein preferably the one or more sources for X₂O₃ comprises one or more aluminates, preferably one or more alkali metal aluminates, more preferably one or more alkali metal aluminates comprising sodium and/or potassium aluminate, preferably sodium aluminate, wherein even more preferably the source for X₂O₃ is sodium and/or potassium aluminate, and preferably sodium aluminate.

6. The process of any of claims 1 to 5, wherein the YO₂: X₂O₃ molar ratio of the mixture provided in step (1) ranges from 10 to 200, more preferably from 20 to 150, more preferably from 40 to 120, and even more preferably from 50 to 100.

7. The process of any of claims 1 to 6, wherein the mixture provided in step (1) further comprises a solvent, wherein said solvent preferably comprises water, more preferably distilled water, wherein even more preferably the solvent is water, preferably distilled water.

8. The process of claim 7, wherein the H₂O : YO₂ molar ratio of the mixture provided in step (1) ranges from 1 to 150, preferably from 3 to 100, more preferably from 5 to 60, more preferably from 8 to 45, more preferably from 10 to 35, more preferably from 11 to 30, and even more preferably from 12 to 28.

9. The process of claim 7 or 8, wherein the pH of the mixture provided in step (1) is comprised in the range of from 8 to 14, preferably from 10 to 14, more preferably from 11 to 14, more preferably from 12 to 14, more preferably from 13 to 14, and even more preferably from 13.6 to 13.8.

10. The process of any of claims 1 to 9, wherein the crystallization in step (2) involves heating of the mixture, preferably at a temperature ranging from 80 to 250°C, more preferably from 100 to 200°C, more preferably from 120 to 180°C, more preferably from 130 to 170°C, more preferably from 140 to 160°C, and even more preferably from 145 to 155°C.

11. The process of claim 10, wherein the heating in step (2) is conducted under solvothermal conditions, preferably under hydrothermal conditions.

12. The process of claim 10 or 11, wherein the crystallization in step (2) involves heating of the mixture for a period ranging from 0.1 to 20 d, preferably from 0.5 to 15 d, more preferably from 1 to 10 d, more preferably from 2 to 8 d, more preferably from 3 to 7 d, more preferably from 4 to 6 d, and even more preferably from 4.5 to 5.5 d.

13. The process of any of claims 1 to 12 further comprising one or more steps of
(3) isolating the zeolitic material, preferably by filtration,
and/or
(4) washing the zeolitic material,
and/or
(5) drying the zeolitic material.

14. The process of any of claims 1 to 13 further comprising one or more steps of
(6) calcining the zeolitic material obtained according to (2) or (3) or (4) or (5),
wherein the steps (3) and/or (4) and/or (5) and/or (6) can be conducted in any order, and
wherein at least one of said steps is preferably repeated one or more times.

## Patentansprüche

1. Verfahren zur Herstellung eines zeolithischen Materials mit einer CHA-Gerüststruktur, die YO₂ und X₂O₃ umfasst,
wobei das zeolithische Material ein Y:X-Molverhältnis im Bereich von 1 bis 10,5 aufweist, bei dem man:
(1) eine Mischung bereitstellt, die N,N-Dimethylpiperidiniumhydroxid umfasst und ferner eine oder mehrere Quellen für YO₂ und eine oder mehrere Quellen für X₂O₃ umfasst;
(2) die in (1) bereitgestellte Mischung kristallisiert;
wobei Y für ein vierwertiges Element steht und X für ein dreiwertiges Element steht und
wobei das Molverhältnis von N,N-Dimethyl-piperidiniumhydroxid zu Y in der in Schritt (1) bereitgestellten und in Schritt (2) kristallisierten Mischung gleich oder größer als 0,25 ist, wobei das Molverhältnis bevorzugt im Bereich von 0,25 bis 5, weiter bevorzugt von 0,25 bis 3, weiter bevorzugt von 0,25 bis 2, weiter bevorzugt von 0,3 bis 1,7, weiter bevorzugt von 0,4 bis 1,5, weiter bevorzugt von 0,45 bis 1,3, weiter bevorzugt von 0,5 bis 1,2 und noch weiter bevorzugt von 0,55 bis 1,15 liegt,
wobei das YO₂:X₂O₃-Molverhältnis in der in Schritt (1) bereitgestellten Mischung im Bereich von 5 bis 300 liegt.

2. Verfahren nach Anspruch 1, wobei Y aus der Gruppe bestehend aus Si, Sn, Ti, Zr, Ge und Mischungen von zwei oder mehr davon ausgewählt ist, wobei Y bevorzugt Si umfasst und wobei noch weiter bevorzugt Y Si ist.

3. Verfahren nach einem der Ansprüche 1 bis 2, wobei die eine Quelle bzw. die mehreren Quellen für YO₂ eine oder mehrere Verbindungen aus der Gruppe bestehend aus Kieselsäuren, Silikaten und Mischungen von zwei oder mehr davon umfasst bzw. umfassen, wobei bevorzugt die eine Quelle bzw. die mehreren Quellen für YO₂ eine oder mehrere Kieselsäuren umfasst bzw. umfassen, wobei bevorzugt die eine Quelle bzw. die mehreren Quellen für YO₂ pyrogene Kieselsäure umfasst bzw. umfassen und wobei es sich noch weiter bevorzugt bei der Quelle für YO₂ um pyrogene Kieselsäure handelt.

4. Verfahren nach einem der Ansprüche 1 bis 3, wobei X aus der Gruppe bestehend aus Al, B, In, Ga und Mischungen von zwei oder mehr davon ausgewählt ist, wobei X bevorzugt Al, B oder Ga umfasst, wobei weiter bevorzugt X Al und/oder B umfasst und wobei noch weiter bevorzugt X Al oder B ist.

5. Verfahren nach einem der Ansprüche 1 bis 4, wobei die eine Quelle bzw. die mehreren Quellen für X₂O₃ eine oder mehrere Verbindungen aus der Gruppe bestehend aus Aluminiumoxiden, Aluminaten und Mischungen von zwei oder mehr davon umfasst bzw. umfassen, wobei bevorzugt die eine Quelle bzw. die mehreren Quellen für X₂O₃ ein oder mehrere Aluminate, bevorzugt ein oder mehrere Alkalimetallaluminate, weiter bevorzugt ein oder mehrere Alkalimetallaluminate, die Natrium-und/oder Kaliumaluminat, bevorzugt Natriumaluminat, umfassen, umfasst bzw. umfassen, wobei es sich noch weiter bevorzugt bei der Quelle für X₂O₃ um Natrium- und/oder Kaliumaluminat, bevorzugt Natriumaluminat, handelt.

6. Verfahren nach einem der Ansprüche 1 bis 5, wobei das YO₂:X₂O₃-Molverhältnis der in Schritt (1) bereitgestellten Mischung im Bereich von 10 bis 200, weiter bevorzugt von 20 bis 150, weiter bevorzugt von 40 bis 120, noch weiter bevorzugt von 50 bis 100 liegt.

7. Verfahren nach einem der Ansprüche 1 bis 6, wobei die in Schritt (1) bereitgestellte Mischung ferner ein Lösungsmittel umfasst, wobei das Lösungsmittel bevorzugt Wasser, weiter bevorzugt destilliertes Wasser, umfasst, wobei es sich noch weiter bevorzugt bei dem Lösungsmittel um Wasser, bevorzugt destilliertes Wasser, handelt.

8. Verfahren nach Anspruch 7, wobei das H₂O:YO₂-Molverhältnis der in Schritt (1) bereitgestellten Mischung im Bereich von 1 bis 150, bevorzugt von 3 bis 100, weiter bevorzugt von 5 bis 60, weiter bevorzugt von 8 bis 45, weiter bevorzugt von 10 bis 35, weiter bevorzugt von 11 bis 30, noch weiter bevorzugt von 12 bis 28 liegt.

9. Verfahren nach Anspruch 7 oder 8, wobei der pH-Wert der in Schritt (1) bereitgestellten Mischung im Bereich von 8 bis 14, bevorzugt von 10 bis 14, weiter bevorzugt von 11 bis 14, weiter bevorzugt von 12 bis 14, weiter bevorzugt von 13 bis 14 und noch weiter bevorzugt von 13,6 bis 13,8 liegt.

10. Verfahren nach einem der Ansprüche 1 bis 9, wobei man bei der Kristallisation im Schritt (2) die Mischung erhitzt, vorzugweise auf eine Temperatur im Bereich von 80 bis 250 °C, weiter bevorzugt von 100 bis 200 °C, weiter bevorzugt von 120 bis 180 °C, weiter bevorzugt von 130 bis 170 °C, weiter bevorzugt von 140 bis 160 °C und noch weiter bevorzugt von 145 bis 155 °C.

11. Verfahren nach Anspruch 10, bei dem das Erhitzen in Schritt (2) unter solvothermalen Bedingungen, bevorzugt unter hydrothermalen Bedingungen, durchgeführt wird.

12. Verfahren nach Anspruch 10 oder 11, wobei man bei der Kristallisation im Schritt (2) die Mischung über einen Zeitraum im Bereich von 0,1 bis 20 d, bevorzugt von 0,5 bis 15 d, weiter bevorzugt von 1 bis 10 d, weiter bevorzugt von 2 bis 8 d, weiter bevorzugt von 3 bis 7 d, weiter bevorzugt von 4 bis 6 d und noch weiter bevorzugt von 4,5 bis 5,5 d erhitzt.

13. Verfahren nach einem der Ansprüche 1 bis 12, das ferner einen oder mehrere der folgenden Schritte umfasst:
(3) Isolieren des zeolithischen Materials, bevorzugt durch Filtration,
und/oder
(4) Waschen des zeolithischen Materials und/oder
(5) Trocknen des zeolithischen Materials.

14. Verfahren nach einem der Ansprüche 1 bis 13, das ferner einen oder mehrere der folgenden Schritte umfasst:
(6) Calcinieren des gemäß (2) oder (3) oder (4) oder (5) erhaltenen zeolithischen Materials,
wobei die Schritte (3) und/oder (4) und/oder (5) und/oder (6) in beliebiger Reihenfolge durchgeführt werden können und
wobei mindestens einer der Schritte vorzugsweise ein- oder mehrmals wiederholt wird.

## Revendications

1. Procédé pour la préparation d'un matériau zéolithique possédant une structure de cadre de type CHA comprenant YO₂ et X₂O₃,
le matériau zéolithique présentant un rapport molaire Y:X compris dans la plage allant de 1 à 10,5,
ledit procédé comprenant les étapes de
(1) mise à disposition d'un mélange comprenant de l'hydroxyde de N,N-diméthylpipéridinium et comprenant en outre une ou plusieurs sources pour YO₂ et une ou plusieurs sources pour X₂O₃ ;
(2) cristallisation du mélange mis à disposition en (1) ;
Y étant un élément tétravalent, et X étant un élément trivalent, et
le rapport molaire de l'hydroxyde de N,N-diméthylpipéridinium à Y dans le mélange mis à disposition dans l'étape (1) et cristallisé dans l'étape (2) étant égal ou supérieur à 0,25,
ledit rapport molaire étant préférablement compris dans la plage allant de 0,25 à 5, plus préférablement allant de 0,25 à 3, plus préférablement allant de 0,25 à 2, plus préférablement allant de 0,3 à 1,7, plus préférablement allant de 0,4 à 1,5, plus préférablement allant de 0,45 à 1,3, plus préférablement allant de 0,5 à 1,2, et encore plus préférablement allant de 0,55 à 1,15,
le rapport molaire YO₂:X₂O₃ dans le mélange mis à disposition dans l'étape (1) étant compris dans la plage allant de 5 à 300.

2. Procédé selon la revendication 1, Y étant choisi dans le groupe constitué par Si, Sn, Ti, Zr, Ge, et des mélanges de deux ou plus de ceux-ci, Y comprenant préférablement Si, et encore plus préférablement Y étant Si.

3. Procédé selon l'une quelconque des revendications 1 et 2, la ou les sources pour YO₂ comprenant un ou plusieurs composés choisis dans le groupe constitué par des silices, des silicates, et des mélanges de deux ou plus de ceux-ci, préférablement la ou les sources pour YO₂ comprenant une ou plusieurs silices, plus préférablement la ou les sources pour YO₂ comprenant de la fumée de silice, et encore plus préférablement la source pour YO₂ étant la fumée de silice.

4. Procédé selon l'une quelconque des revendications 1 à 3, X étant choisi dans le groupe constitué par Al, B, In, Ga, et des mélanges de deux ou plus de ceux-ci, X comprenant préférablement Al, B, ou Ga, plus préférablement X comprenant Al et/ou B, et encore plus préférablement X étant Al ou B.

5. Procédé selon l'une quelconque des revendications 1 à 4, la ou les sources pour X₂O₃ comprenant un ou plusieurs composés choisis dans le groupe constitué par des alumines, des aluminates, et des mélanges de deux ou plus de ceux-ci, préférablement la ou les sources pour X₂O₃ comprenant un ou plusieurs aluminates, préférablement un ou plusieurs aluminates de métal alcalin, plus préférablement un ou plusieurs aluminates de métal alcalin comprenant de l'aluminate de sodium et/ou de potassium, préférablement de l'aluminate de sodium, encore plus préférablement la source pour X₂O₃ étant l'aluminate de sodium et/ou de potassium, et préférablement l'aluminate de sodium.

6. Procédé selon l'une quelconque des revendications 1 à 5, le rapport molaire YO₂:X₂O₃ du mélange mis à disposition dans l'étape (1) se situant dans la plage de 10 à 200, plus préférablement de 20 à 150, plus préférablement de 40 à 120, et encore plus préférablement de 50 à 100.

7. Procédé selon l'une quelconque des revendications 1 à 6, le mélange mis à disposition dans l'étape (1) comprenant en outre un solvant, ledit solvant comprenant préférablement de l'eau, plus préférablement de l'eau distillée, encore plus préférablement le solvant étant de l'eau, préférablement de l'eau distillée.

8. Procédé selon la revendication 7, le rapport molaire H₂O:YO₂ du mélange mis à disposition dans l'étape (1) se situant dans la plage de 1 à 150, préférablement de 3 à 100, plus préférablement de 5 à 60, plus préférablement de 8 à 45, plus préférablement de 10 à 35, plus préférablement de 11 à 30, et encore plus préférablement de 12 à 28.

9. Procédé selon la revendication 7 ou 8, le pH du mélange mis à disposition dans l'étape (1) étant compris dans la plage allant de 8 à 14, préférablement de 10 à 14, plus préférablement de 11 à 14, plus préférablement de 12 à 14, plus préférablement de 13 à 14, et encore plus préférablement de 13,6 à 13,8.

10. Procédé selon l'une quelconque des revendications 1 à 9, la cristallisation dans l'étape (2) impliquant le chauffage du mélange, préférablement à une température se situant dans la plage de 80 à 250 °C, plus préférablement de 100 à 200 °C, plus préférablement de 120 à 180 °C, plus préférablement de 130 à 170 °C, plus préférablement de 140 à 160 °C, et encore plus préférablement de 145 à 155 °C.

11. Procédé selon la revendication 10, le chauffage dans l'étape (2) étant conduit dans des conditions solvothermales, préférablement dans des conditions hydrothermales.

12. Procédé selon la revendication 10 ou 11, la cristallisation dans l'étape (2) impliquant le chauffage du mélange pendant une période de temps se situant dans la plage de 0,1 à 20 j, préférablement de 0,5 à 15 j, plus préférablement de 1 à 10 j, plus préférablement de 2 à 8 j, plus préférablement de 3 à 7 j, plus préférablement de 4 à 6 j, et encore plus préférablement de 4,5 à 5, 5 j.

13. Procédé selon l'une quelconque des revendications 1 à 12 comprenant en outre une ou plusieurs étapes de
(3) isolement du matériau zéolithique, préférablement par filtration, et/ou
(4) lavage du matériau zéolithique, et/ou
(5) séchage du matériau zéolithique.

14. Procédé selon l'une quelconque des revendications 1 à 13, comprenant en outre une ou plusieurs étapes de
(6) calcination du matériau zéolithique obtenu selon (2) ou (3) ou (4) ou (5),
les étapes (3) et/ou (4) et/ou (5) et/ou (6) pouvant être conduites dans un ordre quelconque, et
au moins l'une desdites étapes étant préférablement répétée une ou plusieurs fois.
